Europäisches Patentamt

European Patent Office

Office européen des brevets

(11) Veröffentlichungsnummer: **0 218 774**
**B1**

(12) **EUROPÄISCHE PATENTSCHRIFT**

(45) Veröffentlichungstag der Patentschrift:
22.02.89

(51) Int. Cl.⁴: **F16F 15/12**

(21) Anmeldenummer: **86101778.8**

(22) Anmeldetag: **12.02.86**

(54) Drehschwingungsdämpfer.

(30) Priorität: **08.10.85 DE 3535803**

(43) Veröffentlichungstag der Anmeldung:
**22.04.87 Patentblatt 87/17**

(45) Bekanntmachung des Hinweises auf die Patenterteilung:
**22.02.89 Patentblatt 89/8**

(84) Benannte Vertragsstaaten:
**DE FR GB IT**

(56) Entgegenhaltungen:
**DE-A- 2 729 340**
**DE-A- 3 334 393**
**DE-A- 3 336 174**

(73) Patentinhaber: **Firma Carl Freudenberg, Höhnerweg 4,
D-6940 Weinheim/Bergstrasse(DE)**

(72) Erfinder: **Benno,Michael Jörg, Am Drachenstein 27,
D-6940 Weinheim(DE)**
Erfinder: **Seifert, Heinz, Hauptstrasse 99,
D-6941 Laudenbach(DE)**

(74) Vertreter: **Weissenfeld-Richters, Helga, Dr.,
Höhnerweg 2, D-6940 Weinheim/Bergstrasse(DE)**

**Beschreibung**

Die Erfindung betrifft einen Drehschwingungsdämpfer, umfassend einen Nabenring und einen Schwungring, die durch mindestens ein Federelement verbunden und relativ verdrehbar sind, wobei in wenigstens einem Teilbereich zwischen dem Nabenring und dem Schwungring ein radialer Abstand vorgesehen ist, und wobei in dem durch den Abstand gebildeten Spalt mindestens ein zweites Federelement nur innenseitig festgelegt ist, das außenseitig ohne Bindung ist.

Auf einen Drehschwingungsdämpfer der vorgenannten Art nimmt die DE-A 3 336 174 Bezug. Die zweiten Federelemente vermögen bei dieser Ausführung die Innenseite des Schwungringes nur dann zu berühren, wenn sich eine radiale Auslenkung des Schwungringes gegenüber dem Nabenring ergibt. Die dabei entstehenden Reibkräfte beeinflussen die Torsionsschwingungsdämpfung. Von einer unverrückbaren, durch Fliehkraft verursachten Anpressung der zweiten Federelemente an die Innenseite des Schwungringes ist nicht die Rede.

In dem Bestreben, die Tilgerwirkung in einem Drehschwingungsdämpfer geschlossener Bauart für die Bedämpfung von Resonanzschwingungen unterschiedlicher Frequenzlagen nutzbar zu machen, ist auch schon vorgeschlagen worden, mehrere Schwungmassen zu verwenden, die elastisch an die Nabe oder aneinander angekoppelt sind. Die einzelnen Schwingungssysteme sind in diesem Falle jeweils so abgestimmt, daß jedes einzelne für die Dämpfung einer Störschwingung einer bestimmten Frequenz optimal ausgelegt ist (DE-U 1 997 151). Je nach Frequenzlage der eingeleiteten Störschwingungen wird somit abwechselnd das eine oder das andere enthaltene Schwingungssystem aktiviert und zur Bedämpfung der Störschwingungen allein herangezogen. Das Vorhandensein der übrigen Systeme und insbesondere der darin enthaltenen Trägheitsmassen bedingt indessen neben einer Beeinträchtigung der Wirksamkeit ein vergleichsweise hohes Gewicht sowie sehr hohe Herstellkosten. Es entstand daher der Wunsch nach der Verfügbarkeit eines Resonanzschwingungsdämpfers für Drehbewegungen, bei dem solche Nachteile nicht vorhanden sind. Der vorgeschlagene Resonanzschwingungsdämpfer soll es insbesondere gestatten, Störschwingungen einer unterschiedlichen Frequenzlage mit einer einzigen Trägheitsmasse zu bedämpfen.

Diese Aufgabe wird erfindungsgemäß bei einem Drehschwingungsdämpfer der eingangs genannten Art dadurch gelöst, daß das zweite Federelement durch die sich bei einer gewünschten Drehzahl ergebende Fliehkraft unverrückbar an die den Spalt außenseitig begrenzende Fläche anpressbar ist um eine Parallelschaltung seiner Federwirkung zu der Federwirkung des ersten Federelementes zu erzielen.

Die Erfindung geht aus von der Überlegung, daß bei Drehschwingungen stets eine klare Abhängigkeit zwischen der Frequenz einer Störschwingung und der Drehzahl vorhanden ist. Die Drehzahl läßt sich dadurch zur Identifizierung und zur gezielten Dämpfung einer Störschwingung verwenden, was erfindungsgemäß unter Ausnutzung der von der Drehzahl abhängigen Fliehkraft erfolgt, indem ein zweites Federelement bei Überschreiten eines Schwellwertes zu dem ersten parallel geschaltet wird.

Die Federung der in dem Schwungring enthaltenen Trägheitsmasse ist dadurch ab Erreichen einer gewünschten Drehzahl härter als zuvor, wodurch sich trotz der weiterhin vollkommen unveränderten Trägheitsmasse eine veränderte Resonanzfrequenz ergibt. Der Tilgereffekt des erfindungsgemäßen Drehschwingungsdämpfers ist dadurch in zwei von einander verschiedenen Frequenzbereichen wirksam. Diese können unter Anwendung der Formel

$$\omega_0 = \sqrt{\frac{c}{m}} ,$$

worin c die veränderliche Federung und m die unveränderliche Masse des Schwungringes bezeichnen, leicht an die Frequenzlage von zwei unterschiedlichen Störschwingungen angepaßt werden. Diese werden daher gleichermaßen unter Ausnutzung des Tilgereffektes gedämpft.

Im Übergangsbereich zwischen der ersten und der zweiten Resonanzfrequenz werden sich vorteilhaft auswirkende Reibdämpfungskräfte wirksam, bis eine haftende Verbindung des zweiten Federelements eintritt.

Modifizierte Ausführungen des erfindungsgemäßen Drehschwingungsdämpfers, bei denen dritte, vierte, fünfte usw. Federelemente mit einer dem zweiten Federelement entsprechenden Ausbildung und Funktion bei noch weiter ansteigender Drehzahl aufeinander folgend aktiviert werden, sind ohne weiteres möglich und erlauben die Erzielung tilgerbedingter Dämpfungswirkungen in weiteren Frequenzbereichen. Hierdurch werden dem erfindungsgemäßen Drehschwingungsdämpfer komplexe Anwendungsmöglichkeiten erschlossen, wobei es von hervorzuhebendem Vorteil ist, daß auch in diesen Fällen die Verwendung eines einzigen Schwungringes genügt. Der erfindungsgemäße Drehschwingungsdämpfer läßt sich dadurch besonders kostengünstig herstellen. Er ist von nur geringem Gewicht.

Das zweite Federelement kann in radialer Richtung beweglich mit dem Nabenring verbunden sein, beispielsweise durch adhäsive Festlegung seines Innendurchmessers an der Außenseite eines nur in radialer Richtung beweglichen Zwischengliedes des Nabenringes. Eine solche Ausführung zeichnet sich durch eine besonders gute Betriebssicherheit aus, bedingt indessen die Herstellung des Zwischengliedes in einem selbständigen Arbeitsvorgang. Im Rahmen der vorliegenden Erfindung wird deshalb einer Ausführung der Vorzug gegeben, bei der das zweite Federelement durch die sich bei der gewünschten Drehzahl ergebende Fliehkraft dehnbar ist und bei der die Dehnung die unverrückbare Anpressung an die den Spalt außenseitig begrenzende Fläche verursacht. Das zweite Federelement kann bei einer solchen Ausführung an einem unbeweglichen Bestandteil des Nabenringes anvulkanisiert sein und beispielsweise durch einen säulenähnlich in radialer Richtung vorspringenden Ansatz des Nabenringes, gebildet werden, der aus gummielastischem Material besteht und innenseitig an den Außendurchmesser des Nabenringes anvulkanisiert ist.

Im Hinblick auf die drehzahlabhängige, unverrückbare Anpressung des zweiten Federelementes an die den Spalt außenseitig begrenzende Fläche hat es sich als vorteilhaft bewährt, wenn das zweite Federelement und/oder die dem zweiten Federelement außenseitig gegenüberliegende den Spalt begrenzende Fläche mit einem Reibbelag versehen ist. Bei gutem Kraftschluß läßt sich hierdurch der Verschleiß vermindern. Auch die Anwendung einer Profilierung der genannten Flächen kann in die Überlegungen mit einbezogen werden.

Nach einer anderen Ausgestaltung ist es vorgesehen, daß das zweite Federelement mit einer Zusatzmasse versehen ist, um eine vergrößerte Anpressung an die den Spalt außenseitig vegrenzende Fläche zu erzielen. Der Grad der relativen Verrückbarkeit zwischen beiden Teilen wird hierdurch weiter vermindert.

Das zweite Federelement besteht zweckmäßig aus einem Körper aus elastomerem Werkstoff, und es bietet sich in diesem Falle an, die Hilfsmasse unmittelbar mit dem Körper zu verbinden Die Hilfsmasse kann beispielsweise in einen Hohlraum des Körpers eingepresst werden, was bevorzugt im Anschluß an dessen Herstellung und Bildung erfolgt. Eine nachträgliche Anpassung der Größe der Hilfsmasse an spezielle Erfordernisse des Einsatzfalles ist dadurch möglich und beispielsweise auch ein Ausgleich von verschleißbedingten Änderungen des Betriebsverhaltens.

Die Hilfsmasse und der das zweite Federelement bildende Körper können unlösbar verbunden sein, beispielsweise durch ein Anvulkanisieren auf adhäsive Weise. In diesem Falle wird eine optimale Robustheit erzielt, was eine Verwendung des erfindungsgemäßen Drehschwingungsdämpfers unter problematischen Umweltbedingungen erlaubt. Auch eine einstückige Ausbildung des zweiten und des ersten Federelementes ist möglich. Sie erlaubt eine besonders kostengünstige Herstellung des beanspruchten Gegenstandes.

Nachfolgend wird der Gegenstand der vorliegenden Erfindung anhand der in der Anlage beigefügten Zeichnung weiter erläutert. Es zeigen:

Figur 1 einen Drehschwingungsdämpfer in längsgeschnittener Darstellung.

Figur 2 den Drehschwingungsdämpfer gemäß Figur 1 in der Vorderansicht.

Figur 3 eine modifizierte Ausführung eines Drehschwingungsdämpfers der erfindungsgemäß vorgeschlagenen Art.

Figur 4 Funktionskurve eines Tilgers mit zwei Resonanzen.

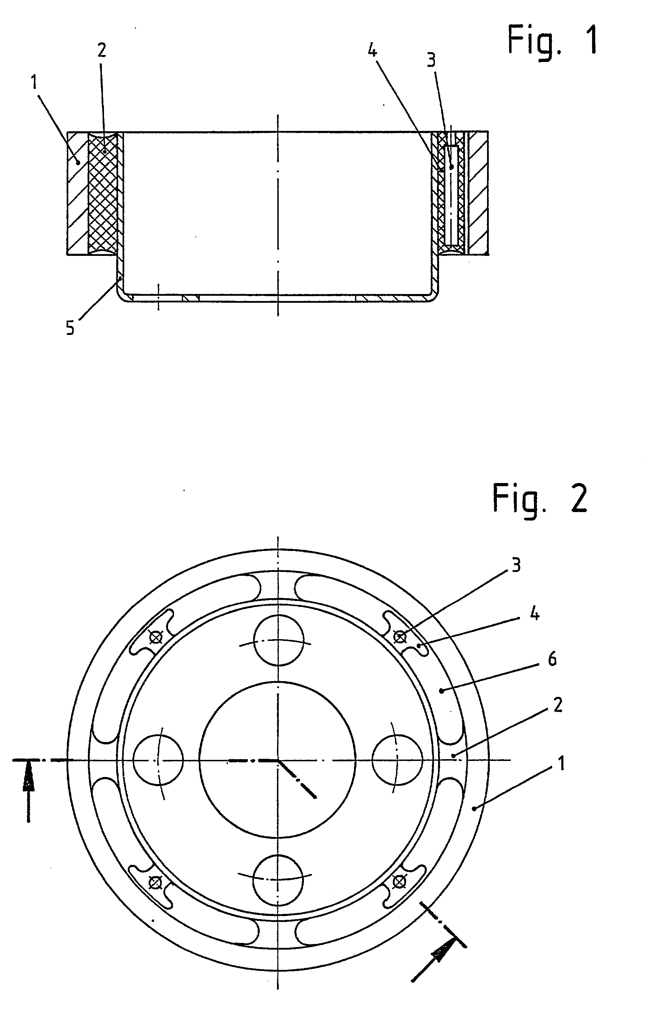

Der in den Figuren 1 und 2 gezeigte Drehschwingungsdämpfer besteht aus dem Nabenring 5, dem Schwungring 1, den ersten Federelementen 2, den in dem Spalt 6 zwischen Nabenring und Schwungring angeordneten zweiten Federelementen 4 und den in deren Ausnehmungen eingepressten Hilfsmassen 3.

Der Nabenring 5 ist von topfförmiger Gestalt und besteht aus tiefgezogenem Stahlblech. Sein Boden ist von zylindrischen Löchern axial durchdrungen, die der radialen Zuordnung und Festlegung an dem zu bedämpfenden, sich drehenden Maschinenteil dienen.

Der Schwungring 1 und der Außendurchmesser des Nabenringes 5 sind durch vier gleichmäßig auf dem Umfang verteilte, erste Federelemente 2 verbunden. Diese bestehen aus gummielastischem Werkstoff und ihre Federung bestimmt neben der Masse des Schwungringes 1 die Lage der sich bei einer niedrigen Drehzahl ergebenden Resonanzfrequenz. Die gegenseitige Abhängigkeit beider Faktoren ergibt sich dabei aus der eingangs genannten Formel. Sie erlaubt es leicht, eine Modifizierung vorzunehmen und beispielsweise auch eine Anpassung an die Frequenz einer sich bei niedriger Drehzahl ergebenden Störschwingung. Die Störschwingung erfährt dann eine ausgezeichnete Dämpfung.

Neben den ersten Federelementen 2 sind am Außendurchmesser des Nabenringes 5 die zweiten Federelemente 4 aus gummielastischem Werkstoff festgelegt. Auch diese sind gleichmäßig auf dem Umfang verteilt und von säulenförmiger Gestalt. Sei weisen außenseitig eine T-förmige Erweiterung ihres Querschnittes auf sowie eine Hilfsmasse 3, die in eine sich axial erstreckende Aussparung eingepresst ist. Die zweiten Federelemente 4 haben unterhalb einer bestimmten Drehzahl einen Abstand von der Innenseite des Außenringes 1. Ihre Federwirkung kommt dadurch in diesem Falle nicht zum Tragen.

Mit ansteigender Drehzahl werden in den zweiten Federelementen 4 zunehmend Fliehkräfte wirksam, die eine radiale Dehnung auslösen. Die zweiten Federelemente 4 legen sich schließlich mit ihrem Außendurchmesser unverrückbar an den Innendurchmesser des Schwungringes 1 an, wodurch ihre Federelastizität derjenigen des ersten Federelementes 2 parallel geschaltet wird. Es resultiert eine relative Verhärtung der insgesamt vorhandenen, in Umfangsrichtung wirksamen Federelastizität, d.h. eine veränderte Resonanzfrequenz des Drehschwingungsdämpfers. Diese läßt sich unter Berücksichtigung der eingangs genannten Formel gezielt einer zweiten bei höherer Drehzahl auftretenden Schwingung zuordnen. Auch diese erfährt eine ausgezeichnete Dämpfung.

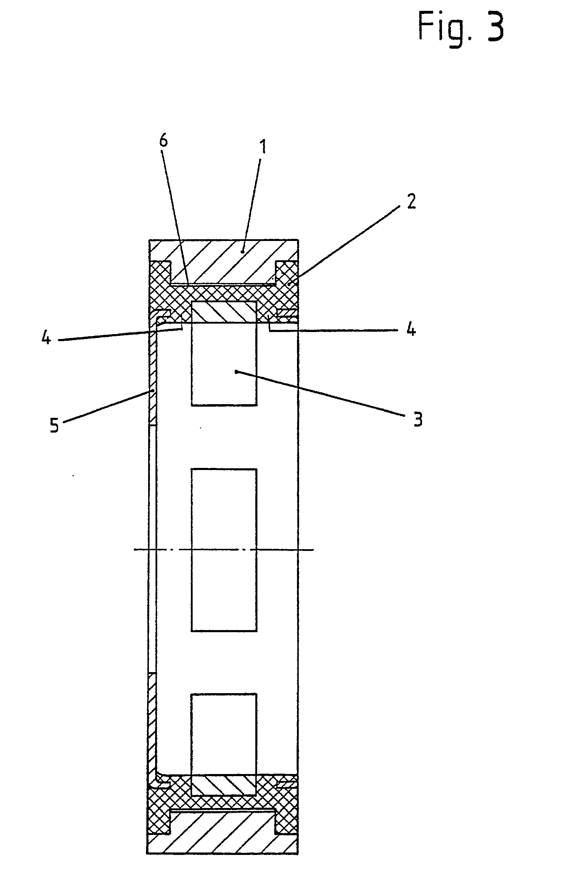

Die in Figur 3 gezeigte Ausführung stimmt funktionell mit der vorstehend beschriebenen überein. Konstruktiv sind in diesem Falle die ersten Federelemente 2 und die zweiten Federelemente 4 einstückig ineinander übergehend ausgebildet. Die Hilfsmassen 3 sind in radiale Durchbrechungen des Nabenringes 5 eingebettet. Sie haben dadurch eine besonders gute radiale Beweglichkeit. Zwischen dem zweiten Federelement 4 und Innenseite des Schwungringes 1 ist auch in diesem Falle bei niedriger Drehzahl ein radialer Spalt 6 vorhanden. Dieser ist im Gegensatz zu dem Spalt nach den Ausführungen gemäß Fig. 1 und 2 nach außen abgeschlossen. Fremdstoffe werden dadurch an einem Eindringen gehindert. Sie vermögen daher auch nicht funktionsbeeinträchtigende Wirkungen auszulösen, was die Ausführung geeignet macht für Anwendungsbereiche mit extremer Umweltbelastung.

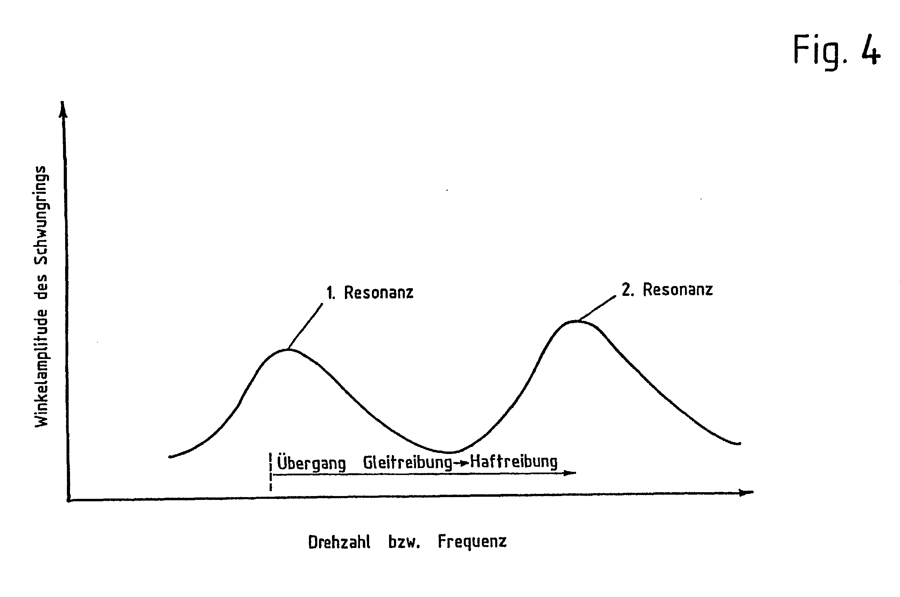

Die in Figur 4 dargestellte Kurve zeigt den Verlauf der Winkelamplitude des Schwungrings über der Drehzahl bzw. Frequenz eines ausgeführten Drehschwingungsdämpfers mit zwei Resonanzfrequenzen. Die bereits im Bereich der ersten Resonanzfrequenz auftretende Gleitreibung durch das Anlegen des zweiten Federelements an die Innenseite des Schwingrings wirkt sich vorteilhaft auf das Dämpfungsverhalten aus. Es werden damit bessere Ergebnisse erzielt, als mit einem Drehschwingungsdämpfer mit zwei Schwungmassen.

**Patentansprüche**

1. Drehschwingungsdämpfer, umfassend einen Nabenring (5) und einen Schwungring (1), die durch mindestens ein erstes Federelement (2) verbunden und relativ verdrehbar sind, wobei in wenigstens einem Teilbereich zwischen dem Nabenring und dem Schwungring ein radialer Abstand vorgesehen ist, und wobei in dem durch den Abstand gebildeten Spalt (6) wenigstens ein zweites Federelement (4) nur innenseitig festgelegt ist, das außenseitig ohne Bindung ist, dadurch gekennzeichnet, daß das zweite Federelement (4) durch die sich bei einer gewünschten Drehzahl ergebende Fliehkraft unverrückbar an die den Spalt (6) außenseitig begrenzende Fläche anpressbar ist, um eine Parallelschaltung seiner Federwirkung zu der Federwirkung des ersten Federelementes (2) zu erzielen.

2. Drehschwingungsdämpfer nach Anspruch 1, dadurch gekennzeichnet, daß das zweite Federelement (4) innenseitig nur in radialer Richtung bewegbaren Zwischenglied des Nabenringes (5) festgelegt und durch die sich bei der gewünschten Drehzahl ergebende Fliehkraft unverrückbar an die den Spalt (6) außenseitig begrenzende Fläche angepaßt ist.

3. Drehschwingungsdämpfer nach Anspruch 1, dadurch gekennzeichnet, daß das zweite Federelement (4) innenseitig an einem dem Nabenring starr zugeordneten Zwischenglied festgelegt ist, daß das zweite Federelement durch die sich bei der gewünschten Drehzahl ergebende Fliehkraft dehnbar ist und daß durch die Dehnung die verrückbare Anpressung an die den Spalt (6) außenseitig begrenzende Fläche verursacht ist.

4. Drehschwingungsdämpfer nach Anspruch 1 bis 3, dadurch gekennzeichnet, daß das zweite Federelement (4) und/oder die dem zweiten Federelement außenseitig gegenüberliegende, den Spalt (6) begrenzende Fläche mit einem Reibbelag versehen ist.

5. Drehschwingungsdämpfer nach Anspruch 1 bis 4, dadurch gekennzeichnet, daß das zweite Federelement (2) zur Vergrößerung seiner fliehkraftbedingten Anpressung an die den Spalt (6) außenseitig begrenzende Fläche mit einer Hilfsmasse (3) versehen ist.

6. Drehschwingungsdämpfer nach Anspruch 5, dadurch gekennzeichnet, daß das zweite Federelement (4) durch einen Körper aus elastomerem Werkstoff gebildet wird und daß die Hilfsmasse (3) mit dem Körper verbunden ist.

7. Drehschwingungsdämpfer nach Anspruch 5–6, dadurch gekennzeichnet, daß die Hilfsmasse (3) in einen Hohlraum des Körpers eingebettet ist.

8. Drehschwingungsdämpfer nach Anspruch 5–7, dadurch gekennzeichnet, daß die Hilfsmasse (3) und der Körper adhäsiv verbunden sind.

9. Drehschwingungsdämpfer nach Anspruch 1–8, dadurch gekennzeichnet, daß das zweite Federelement (4) und das erste Federelement (2) einstückig ineinander übergehend ausgebildet sind.

**Claims**

1. A torsional vibration damper, comprising a hub ring (5) and a rotating ring (1), which are connected by at least a first spring element (2) and are relatively rotatable, a radial distance being provided in at least a partial area between the hub ring and the rotating ring, and at least a second spring element (4) being fixed only on the inside, which is without restraint on the outside, in the gap (6) formed by the distance, characterised in that the second spring element (4) can be pressed immovably against the surface limiting the gap (6) on the outside by the centrifugal force produced at a desired speed, in order to achieve a parallel arrangement of its spring effect to the spring effect of the first spring element (2).

2. A torsional vibration damper according to claim 1, characterised in that the second spring element (4) is fixed on the inside to an intermediate member of the hub ring (5), which member is movable only radially and is pressed by the centrifugal force produced at the desired speed immovably against the surface limiting the gap (6) on the outside.

3. A torsional vibration damper according to claim 1, characterised in that the second spring element (4) is fixed on the inside to an intermediate member rigidly coordinated with the hub ring, in that the second spring element can be extended by the centrifugal force produced at the desired speed, and in that the movable pressing against the surface limiting the gap (6) on the outside is caused by the extension.

4. A torsional vibration damper according to any of claims 1 to 3, characterised in that the second spring element (4) and/or the surface lying opposite the second spring element on the outside and limiting the gap (6) is provided with a friction coating.

5. A torsional vibration damper according to any of claims 1 to 4, characterised in that the second spring element (2) is provided with an auxiliary mass (3) to increase its centrifugal force-induced pressing against the surface limiting the gap (6) on the outside.

6. A torsional vibration damper according to claim 5, characterised in that the second spring element (4) is formed by a body of elastomeric material and in that the auxiliary mass (3) is connected to the body.

7. A torsional vibration damper according to either of claims 5 and 6, characterised in that the auxiliary mass (3) is embedded in a cavity of the body.

8. A torsional vibration damper according to any of claims 5 to 7, characterised in that the auxiliary mass (3) and the body are adhesively bonded.

9. A torsional vibration damper according to any of claims 1 to 8, characterised in that the second spring element (4) and the first spring element (2) are designed so as to merge integrally with each other.

## Revendications

1. Amortisseur d'oscillations de rotation comprenant une bague de moyeu (5) et une bague oscillante (1) qui sont assemblées par au moins un premier élément élastique (2) et qui peuvent tourner l'une par rapport à l'autre tandis que dans au moins une zone partielle entre la bague de moyeu et la bague oscillante existe une distance radiale et que, dans l'intervalle (6) constitué par cette distance est fixé, uniquement du côté intérieur, un second élément élastique (4) qui est sans fixation du côté extérieur, caractérisé en ce que le second élément élastique (4) peut être pressé de manière indissociable sur la surface limitant extérieurement l'intervalle (6) par la force centrifuge apparaissant à une vitesse de rotation souhaitée, afin d'obtenir un fonctionnement en parallèl de son effet élastique avec l'effet élastique du premier élément élastique (2).

2. Amortisseur d'oscillations de rotation selon la revendication 1, caractérisé en ce que le second élément élastique (4) est fixé intérieurement à un élément intermédiaire de la bague de moyeu (5) pouvant se déplacer uniquement en direction radiale et par lequel il est pressé de manière indissociable contre la surface limitant extérieurement l'intervalle (6), sous l'effet de la force centrifuge apparaissant à la vitesse de rotation souhaitée.

3. Amortisseur d'oscillations de rotation selon la revendication 1, caractérisé en ce que le second élément élastique (4) est fixé intérieurement à un élément intermédiaire relié rigidement à la bague de moyeu, en ce que le second élément élastique peut se dilater sous l'effet de la force centrifuge apparaissant à la vitesse de rotation souhaitée et en ce que la pression dissociable sur la surface limitant extérieurement l'intervalle (6) est provoquée par cette dilatation.

4. Amortisseur d'oscillations de rotation selon les revendications 1 à 3, caractérisé en ce que le second élément élastique (4) et/ou la surface limitant l'intervalle (6) et opposée extérieurement au second élément élastique est pourvu d'une couche de frottement.

5. Amortisseur d'oscillations de rotation selon les revendications 1 à 4, caractérisé en ce que le second élément élastique (2) est pourvu d'une masse auxiliaire (3) sur la surface limitant extérieurement l'intervalle (6), afin d'augmenter la pression due à la force centrifuge.

6. Amortisseur d'oscillations de rotation selon la revendication 5, caractérisé en ce que le second élément élastique (4) est constitué par un corps en matériau élastomère et en ce que la masse auxiliaire (3) est reliée à ce corps.

7. Amortisseur d'oscillations de rotation selon les revendications 5 et 6, caractérisé en ce que la masse auxiliaire (3) est insérée dans une cavité du corps.

8. Amortisseur d'oscillations de rotation selon les revendications 5 à 7, caractérisé en ce que la masse auxiliaire (3) et le corps sont assemblés par adhésion.

9. Amortisseur d'oscillations de rotation selon les revendications 1 à 8, caractérisé en ce que le second élément élastique (4) et le premier élément élastique (2) sont réalisés en une pièce et se prolongent l'un l'autre.

Fig. 1

Fig. 2

Fig. 3

Fig. 4

Winkelamplitude des Schwungrings

1. Resonanz

2. Resonanz

Übergang    Gleitreibung→Haftreibung

Drehzahl   bzw.   Frequenz

EP 0 218 774 B1